# EUROPEAN PATENT APPLICATION

(11) **EP 3 957 904 A1**
(43) Date of publication of application: **23.02.2022**
(21) Application number: 21167248.0
(22) Date of filing: 07.04.2021
(51) Int. Cl.: F21V 7/04, F21V 7/00, G02B 19/00, F21Y 115/10

(54) **AN ANTI-GLARE REFLECTOR CUP AND A LAMP WITH THE ANTI-GLARE REFLECTOR CUP**

(30) Priority: 18.08.2020 CN 202010828951
(71) Applicant: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: HE, Zuping, Ningbo, Zhejiang 315103 (CN)
(74) Representative: 2K Patentanwälte Blasberg Kewitz & Reichel

(57) **Abstract**

The invention discloses an anti-glare reflective cup, comprising a reflective sidewall, and the reflective cavity is provided a light exit end and a light source placement location, light from the light source includes a first light beam directly emitted from the light exit end and a second light beam emitted from the light exit end after being reflected by the reflective sidewall; the maximum included angle between the first light beam and the optical axis is a maximum straight outgoing light angle, and the maximum included angle between the second light beam which is reflected by the reflective sidewall and emitted from the light exit end and the optical axis is the maximum reflection outgoing light angle, and the maximum reflection outgoing light angle is less than or equal to the maximum straight outgoing light angle. The invention provides excellent lighting experience and solves the problems of glare.

## Description

### RELATED APPLICATION

This application claims priority to Chinese Patent Application No. CN 202010828951.3, filed on August 18, 2020.

### FIELD OF THE TECHNOLOGY

The invention relates to the technical field of lighting, in particular to an anti-glare reflector cup and a lamp with the anti-glare reflector cup.

### BACKGROUND OF THE INVENTION

In the context of energy conservation and environmental protection, LED lamps are increasingly used in the home and commercial lighting fields because of their high light-emitting efficiency and good light-gathering performance.

Regarding indoor lighting design applications in homes, offices or commercial places, visual comfort is extremely important. To achieve this, products that reduce direct glare and reflected glare should be selected. The correct placement of the lamp and the use of optical components that can reduce direct glare and reflected glare can reduce the impact of glare on people or damage to human eyes.

To reduce glare, it is necessary to provide a uniform direct beam as much as possible, and reduce the horizontal beam parallel to the horizontal plane of the lighting space. For this reason, the existing space lighting mainly uses reflectors or shutters to restrict the illumination beam to the undesired direction, or increase the shading angle of the lamp (that is, the angle between the illumination beam and the horizontal line). Another method is to use a scattering element to cover the bright light beam, but it will affect the light effect or the anti-glare effect is not good.

### BRIEF SUMMARY OF THE INVENTION

It is an object of the present invention to provide an anti-glare reflector cup and a lamp with the reflector cup to solve the above technical problems.

This problem is solved by an anti-glare reflector cup as claimed by claim 1 and by a lamp with such a reflector cup as claimed by claim 14. Further advantageous embodiments are the subject-matter of the dependent claims.

According to a first aspect of the present invention there is provided an anti-glare reflective cup, comprising a reflective sidewall, the reflective sidewall surrounds a reflective cavity, and the reflective cavity is cone-shaped with a large end which is a light exit end, a light source placement location is provided near a small end, and a straight line passing through the light source placement location and perpendicular to the plane where the light exit end is located is defined as the optical axis, characterized in that, in any plane passing through the optical axis, light from the light source placed at the light source placement location includes a first light beam directly emitted from the light exit end and a second light beam emitted from the light exit end after being reflected by the reflective sidewall; on the same side of the optical axis, the maximum included angle between the first light beam and the optical axis is a maximum straight outgoing light angle, and the maximum included angle between the second light beam which is reflected by the reflective sidewall and then emitted from the light exit end and the optical axis is the maximum reflection outgoing light angle, and the maximum reflection outgoing light angle is less than or equal to the maximum straight outgoing light angle.

According to a further embodiment preferably, in any plane passing through the optical axis, and at least part of the reflective sidewall is straight or curved.

According to a further embodiment preferably, in any plane passing through the optical axis, when at least part of the reflective sidewall is curved, and the center of curvature of the curve is located outside the reflective sidewall.

According to a further embodiment preferably, in any plane passing through the optical axis, when at least part of the reflective sidewall is curved, the center of curvature of the curve is located outside the reflective sidewall, and the radius of curvature of the curve becomes smaller and smaller along the direction away from the light source placement location.

According to a further embodiment preferably, among the reflected light of the second light beam on the reflective sidewall that is farthest from the light source placement location, the optical axis intersects or is parallel to the inverse extension line of the reflected light having the largest included angle with the plane where the light exit end is located; or, among the reflected light of the second light beam on the reflective sidewall that is farthest from the light source placement location, the optical axis intersects to the reflected light having the largest included angle with the plane where the light exit end is located; the included angle is α, 0< α ≦10°.

According to a further embodiment preferably, among the reflected light of the second light beam on the reflective sidewall that is farthest from the light source placement location, the optical axis intersects to the reflected light having the largest included angle with the plane where the light exit end is located, the included angle is α, and α>10°.

According to a further embodiment preferably, in a plane perpendicular to the optical axis, the reflective sidewall is round shape or polygon.

According to a further embodiment preferably, when the reflective sidewall is polygonal, a chamfer is provided at the junction of the reflective sidewall.

According to a further embodiment preferably, in a plane perpendicular to the optical axis, the reflective sidewall is a regular polygon.

According to a further embodiment preferably, in a plane perpendicular to the optical axis, the reflective sidewall is rectangular.

According to a further embodiment preferably, the center of the regular polygon falls on the optical axis.

According to a further embodiment preferably, the reflective surface of the reflective sidewall is a mirror surface.

According to a further embodiment preferably, the optical axis coincides with the maximum light emitting direction of the light source.

According to a further aspect of the present invention there is provided a lamp, comprising a lamp holder, a light source arranged on the lamp holder and the anti-glare reflector cup mentioned above.

According to a further embodiment preferably, the light source uses an LED chip.

According to a further embodiment preferably, the maximum light emitting direction of the LED chip coincides with the optical axis.

### Technical effects of the present invention:

The anti-glare reflector cup and lamp of the present invention can limit the angle of all the reflected light within the shading angle after the light source is lit, and then realize that outside the shading angle, no reflected light will enter the human eye, thereby realizing black light illumination. It can meet the lighting needs without giving people a dazzling feeling, creating a very comfortable lighting effect, bringing an excellent lighting experience, and solving the problem of glare and heavy glare.

### BRIEF DESCRIPTION OF THE DRAWINGS

The embodiments of the present invention are described below in conjunction with the accompanying drawings, in which:
FIG.1 is a schematic diagram of a three-dimensional structure of an anti-glare reflector cup according to an embodiment of the present invention.
FIG.2 is a schematic diagram of the light path of the cross-sectional view of the anti-glare reflector cup of FIG.1.
FIG.3 is a schematic diagram of the light path in a cross-sectional view of an anti-glare reflector cup according to another embodiment of the present invention.
FIG.4 is a schematic diagram of the light path in a cross-sectional view of an anti-glare reflector cup according to another embodiment of the present invention.
FIG.5 is a schematic diagram of the light-emitting structure of the anti-glare reflector cup of FIG.1.
FIG.6 is a schematic diagram of light intensity distribution of the anti-glare reflector cup of FIG.5.
FIG.7 is a schematic diagram of a light-emitting structure of an anti-glare reflector cup according to another embodiment of the present invention.
FIG.8 is a schematic diagram of light intensity distribution of the anti-glare reflector cup of FIG.7.
FIG.9 is a schematic diagram of a light emitting structure of an anti-glare reflector cup according to another embodiment of the present invention.
FIG.10 is a schematic diagram of light intensity distribution of the anti-glare reflector cup of FIG.9.
FIG.11 is a schematic diagram of the illuminance distribution of the anti-glare reflector cup of FIG.1 on the illumination surface.
FIG.12 is a schematic structural diagram of a lamp according to an embodiment of the present invention.

### DETAILED DESCRIPTION OF THE INVENTION

The embodiments of the present invention will be described in detail below. Examples of the embodiments are shown in the accompanying drawings, wherein the same or similar reference numerals indicate the same or similar elements or elements with the same or similar functions. The embodiments described below with reference to the accompanying drawings are exemplary, and are only used to explain the present invention, and cannot be understood as a limitation to the present invention.

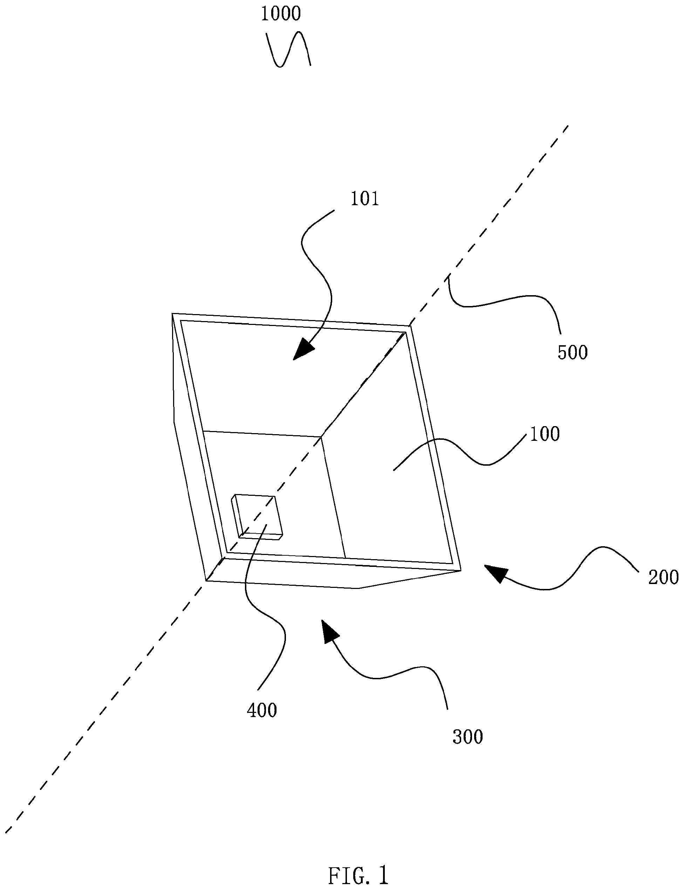

As shown in FIG. 1, the anti-glare reflector cup 1000 of this embodiment includes a reflective sidewall 100, wherein the reflective sidewall 100 surrounds a reflective cavity 101. The reflective cavity 101 is generally tapered, and the large (wider) end is a light exit end 200, and there is a light source placement location 300 near the small (narrower) end. The above-mentioned structure is consistent with the reflector cup of the prior art. The reflector cup refers to a reflector used for point light sources and that require concentrated illumination. It is usually cup-shaped, commonly known as a reflector cup. The small end is close to the light source placement location 300, and the large end is the light exit end 200. The generally tapered shape here refers to the shape formed by the gradual change of the opening width from the small end to the large end. The generally tapered shape refers to the reflective sidewall 100 that does not necessarily change in proportion to be straight, but may also be curved here. In order to better describe the light distribution of the anti-glare reflector cup 1000 of this embodiment, a straight line passing through the center of the light source placement location 300 and perpendicular to the plane where the light exit end 200 is located is defined as the optical axis 500, and in any plane passing through (perpendicular to) the optical axis 500, the light emitting from the light source 400 includes a first light beam 401 directly emitted from the light exit end 200 and a second light beam 402 emitted from the light exit end 200 after being reflected by the reflective sidewall 100.

In this embodiment, the positional relationship between the light exit end 200 and the light source placement location 300 defines the lighting range of the anti-glare reflector cup 1000 of this embodiment. On the same side of the optical axis 500, the maximum included angle between the first light beam 401 and the optical axis 500 is the maximum straight outgoing light angle 403, and the maximum included angle between the optical axis 500 and the light going out from the light exit end 200 after the second beam 402 is reflected by the reflective sidewall 100 is the maximum reflection outgoing light angle 404. By setting the inclination angle and curved change (surface change) of the light source placement location 300 and the reflective sidewall 100, the maximum reflection outgoing light angle 404 is less than or equal to the maximum straight outgoing light angle 403. The maximum straight outgoing light angle 403 here is also the shielding angle of the anti-glare reflector cup 1000. Through the above settings, the angle of all reflected light can be limited to the shielding angle range, so as to realize that outside the maximum straight outgoing light angle 403, no reflected light will enter the human eyes and it can realize black light illumination, which can not only meet the lighting needs, but also will not give people a dazzling feeling, creating a very comfortable lighting effect. The black light lighting effect, as the name implies, is that when people look at the light-emitting surface of the lamp from a certain angle, the light-emitting surface is black, and no light from the lamp can be seen. It feels that the lamp does not light up, which brings an excellent lighting experience. The problem of dazzling and heavy glare is solved.

The reflective sidewall 100 is approximately inclined outward from the inside to the outside. In order to make the reflected light beam uniformly distributed, in any plane passing through the optical axis 500, at least part of the reflective sidewall 100 is straight or curved, and in the plane the reflective sidewall 100 may be formed by a straight line, a curved line, or a plurality of lines connected in the plane, and the lines may be straight or curved, and the connection point may be smoothly transitioned.

The light source placement location 300 can be located on the plane where the small (narrow) end is located, or on the outside or inside, which will affect the light distribution and can be set as required. In this embodiment, the light source placement location 300 is located outside the reflective cavity 101 near the small end.

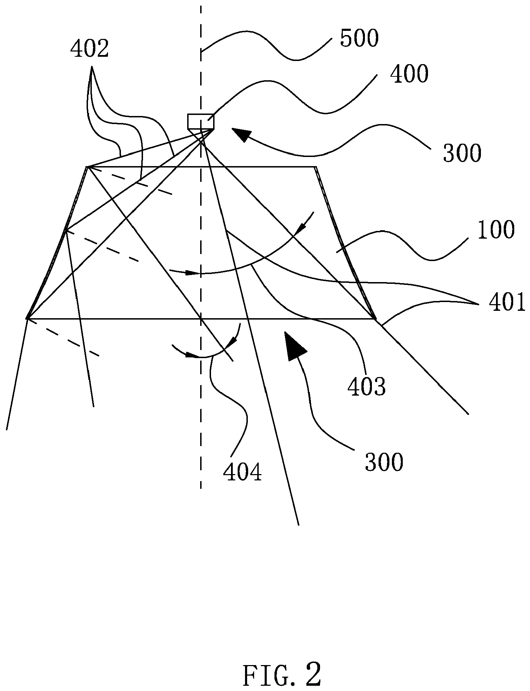

In any plane passing through the optical axis 500, the reflective sidewall 100 generally may be categorized under the three following situations:
The first situation is a curve, and the center of curvature falls outside the reflective sidewall 100. The light source 400 uses a light-emitting chip with a certain volume, and the light-emitting surface has an area. As shown in Figure 2, taking the reflective sidewall 100 on one side as an example, it has a diffuse effect on the reflected light. The light from the light source 400 at the farthest light-emitting position from the reflective sidewall 100 falls at the bottom of the reflective sidewall 100, the included angle between its reflection angle and the optical axis 500 is the maximum reflection outgoing light angle 404. As long as the maximum reflection outgoing light angle 404 is less than or equal to the maximum straight outgoing light angle 403, no reflection light can be seen within the shielding angle wherein anti-glare light effect is very good. In this embodiment, this solution is adopted, and the reflective sidewall 100 is formed by connecting three sections of curves in the plane.

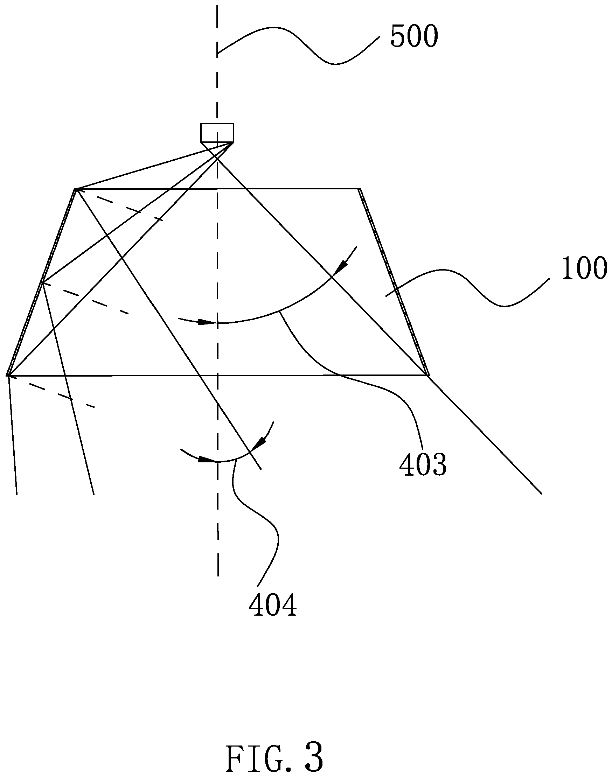

The second situation is a straight line. The light source 400 uses a light-emitting chip, which has a certain volume, and the light-emitting surface has an area. As shown in FIG. 3, taking the reflective sidewall 100 on one side as an example, there is no condensing or diffusing of the reflected light. The effect is that when the light from the light source 400 farthest from the reflective sidewall 100 at the light exit end position falls on the bottom of the reflective sidewall 100, the included angle between its reflection angle and the optical axis 500 is the maximum reflection outgoing light angle 404, as long as the maximum reflection outgoing light angle 404 is less than or equal to the maximum straight outgoing light angle 403,it can be ensured that no reflected light can be seen within the range of the shielding angle, and the anti-glare effect is very good. Another embodiment adopts this solution.

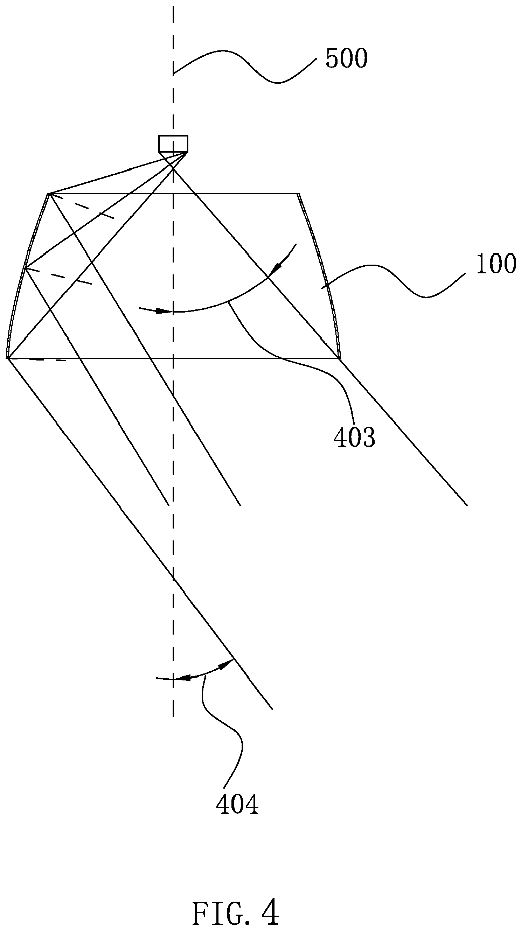

The third situation is a curve, and the center of curvature falls within the reflective sidewall 100. The light source 400 uses a light-emitting chip, which has a certain volume and the light-emitting surface has an area. As shown in FIG. 4, the reflective sidewall 100 on one side is taken as an example, for the condensing effect of reflected light, the maximum reflection outgoing light angle 404 is located at the top of the reflective sidewall 100, and the included angle between its reflection angle and the optical axis 500 is the maximum reflection outgoing light angle 404. As long as the maximum reflection outgoing light angle 404 is less than or equal to the maximum straight outgoing light angle 403, it can ensure that no reflected light can be seen within the range of the shielding angle, and the anti-glare effect is very good. Another embodiment adopts this solution.

In order to make the light distribution on the illumination surface uniform, in any plane passing through the optical axis 500, when at least part of the reflective sidewall 100 is a curve, the center of curvature of the curve is located outside the reflective sidewall 100. In this embodiment, the center of curvature of the three-segment curve is located outside the reflective sidewall 100. Compared with the reflective sidewall 100 arranged in a straight line, the curved light beam can be further diffused and the uniformity is improved.

In order to make the light distribution on the illumination surface uniform, in any plane passing through the optical axis 500, when at least part of the reflective sidewall 100 is curved, the center of curvature of the curve is located outside the reflective sidewall 100, and the radius of curvature of the curve becomes smaller and smaller along the direction away from the light source placement location 300. In this embodiment, the radius of curvature of the three-segment curve is getting smaller and smaller, and the curvature is getting larger and larger. This is because the farther away the light source placement location 300, the greater the intensity of the light beams falling on the reflective sidewall 100. The setting realizes that the reflected beam distribution is more uniform.

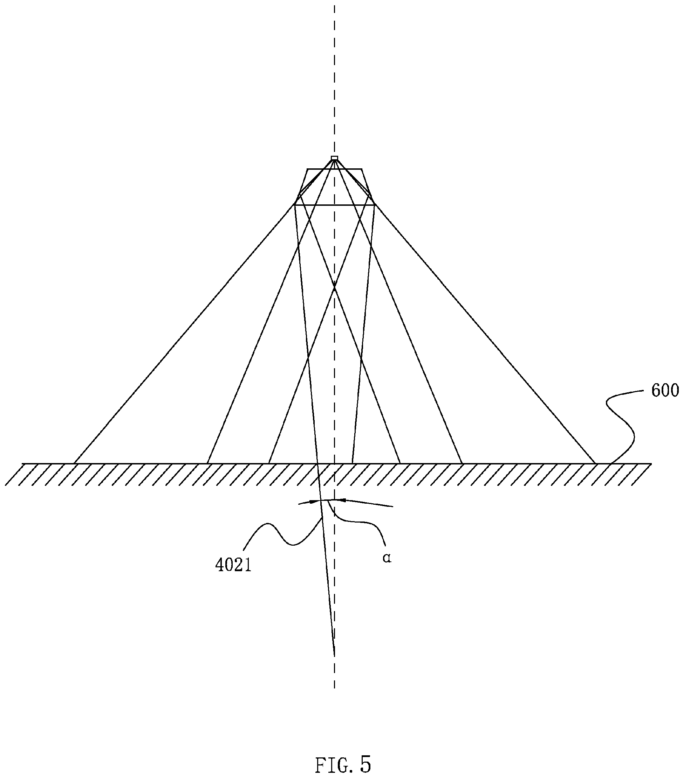

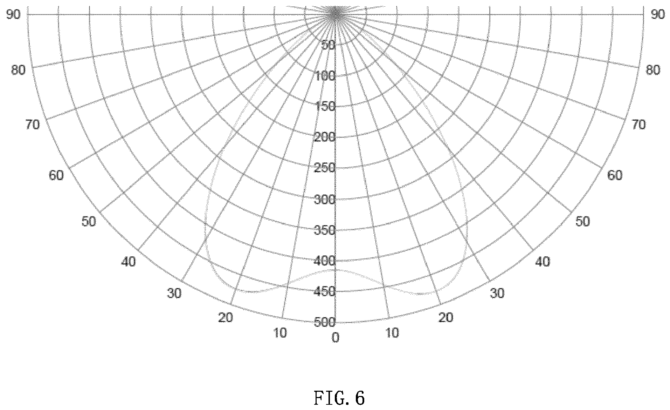

In order to further improve the uniformity of light output, among the reflected light of the second light beam 402 on the reflective sidewall 100 at the farthest distance from the light source placement location 300, the optical axis 500 intersects or is parallel to the inverse extension line of the reflected light having the largest included angle with the plane where the light exit end 200 is located; the reflected light of the second light beam 402 on the reflective sidewall 100 is from the inside to the outside, and the farther away from the light source 300 is, and the greater the included angle with the plane where the light exit end 200 locates, the light source generally has a volume and the light emitting position is different, and the reflected light at the same position on the reflective sidewall 100 will be different. Therefore, among the reflected light of the second light beam 402 on the reflective sidewall 100 that is farthest from the light source placement location 300, the reflected light having the largest included angle with the plane where the light exit end 200 is located is the first reflected light 4021 located on the outermost side. The first reflected light 4021 determines the illumination range of the reflected light from the second light beam 402 after reflection by the reflective sidewall 100. In this embodiment, among the reflected light of the second light beam 402 on the reflective sidewall 100 that is farthest from the light source placement location 300, the optical axis 500 intersects to the reflected light having the largest included angle with the plane where the light exit end 200 is located; The included angle is α, 0< α ≦ 10° . That is, the included angle between the first reflected light 4021 and the optical axis 500 is relatively small, and a lighting effect with a relatively uniform light intensity distribution is obtained, as shown in FIG. 5 and 6.

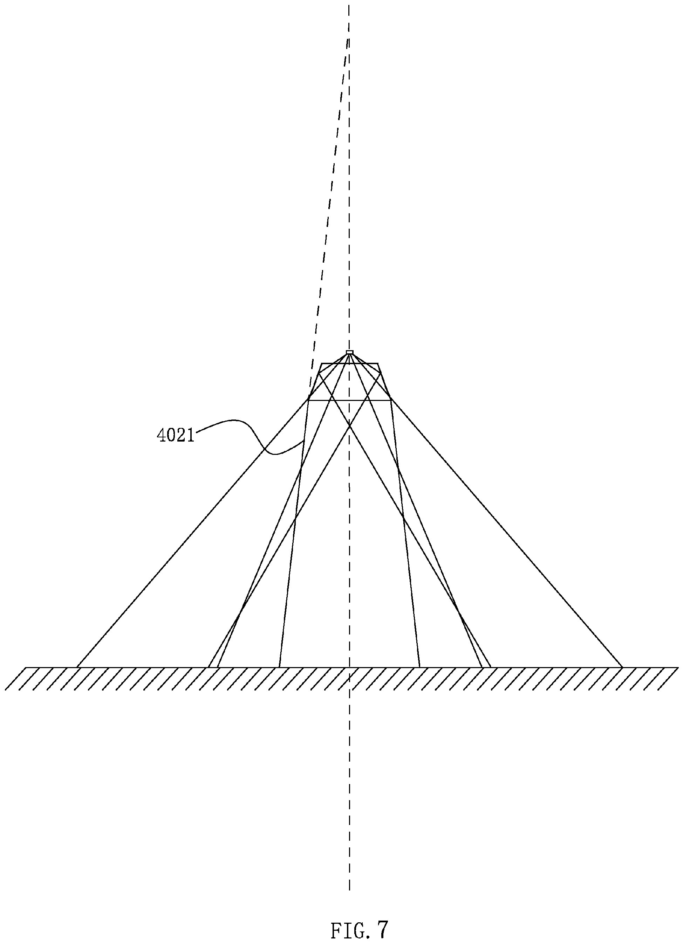

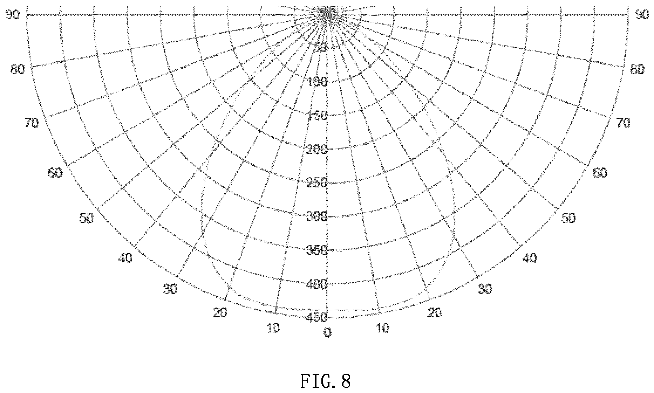

In another embodiment, the reverse extension line of the first reflected light 4021 intersects the optical axis 500, so that the reflected light from the second light beam 402 after being reflected by the reflective sidewall 100 illuminates a larger range, and the light intensity evenly distributed lighting effects can also be obtained as shown in Figures 7 and 8.

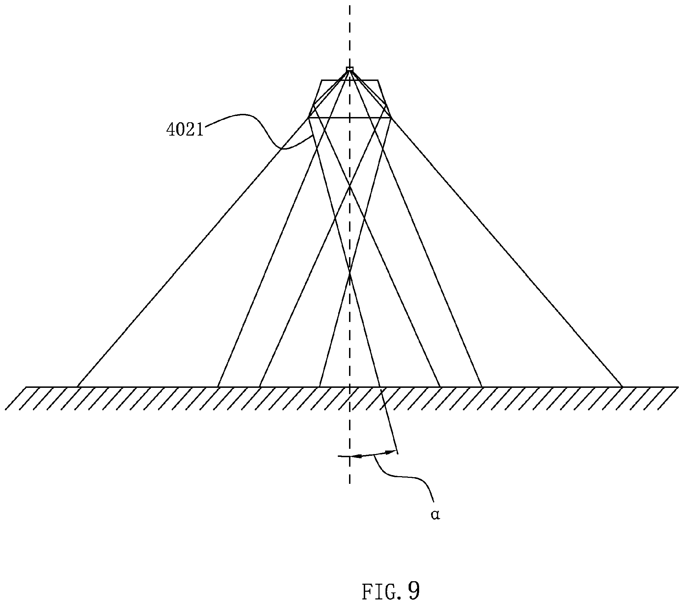

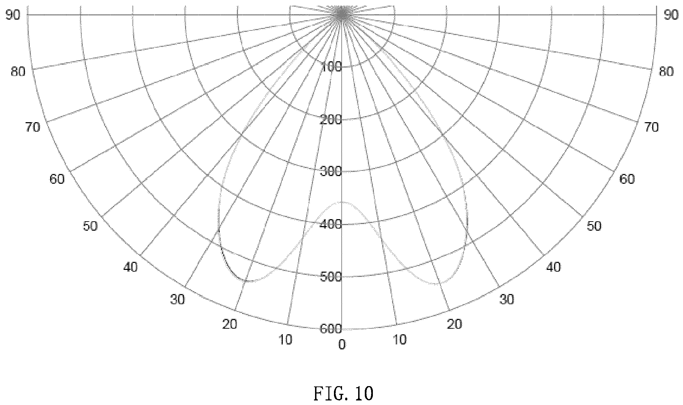

In another embodiment, among the reflected light of the second light beam 402 on the reflective sidewall 100 that is farthest from the light source placement location 300, the optical axis 500 intersects to the reflected light having the largest included angle with the plane where the light exit end 200 is located, the included angle is α, and α>10°. That is, the included angle between the first reflected light 4021 and the optical axis 500 is relatively large. At this time, the reflected light from the second light beam 402 after being reflected by the reflective sidewall 100 has a small irradiation range and deviates to one side, and the light intensity distribution is as shown in Figures 9 and 10, it is more suitable for use when there is a need for accent lighting on both sides.

The above is the light distribution of the reflective sidewall 100 along the optical axis 500, and in the ring direction, in a plane perpendicular to the optical axis 500, the reflective sidewall 100 is circular or polygonal. Further, when the reflective sidewall 100 is polygonal, the junction of the reflective sidewall 100 is provided with a chamfer. It is easy to manufacture, to be demolded and to be plated or coated by a reflective layer. Furthermore, in a plane perpendicular to the optical axis 500, the reflective sidewall 100 is a regular polygon. In this embodiment, in a plane perpendicular to the optical axis 500, the reflective sidewall 100 is rectangular. At this time, the light intensity distribution is more uniform.

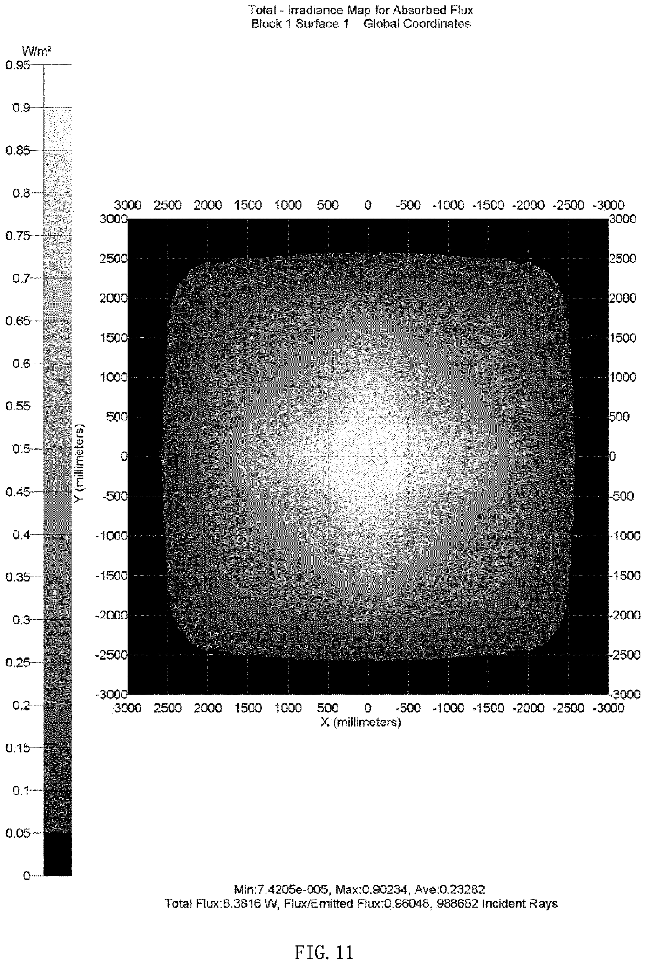

In order to make the light output symmetrical about the center of the optical axis 500 and make the light output more uniform, in this embodiment, the center of the rectangle falls on the optical axis 500. After the light from the light source 400 passes through the anti-glare reflective cup 1000 of this embodiment, the illuminance diagram on the illumination surface 600 is shown in Figure 11.

In this embodiment, the reflective surface of the reflective sidewall 100 is a mirror surface. It can be realized by vacuum coating. The material, manufacturing process, and electroplating process of the reflective sidewall 100 are all existing technologies, and will not be repeated here.

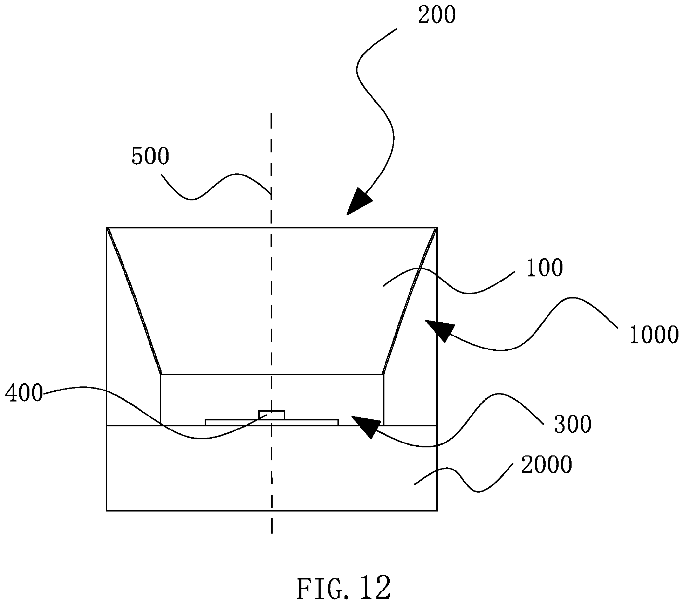

As shown in FIG. 12, the lamp of this embodiment includes a lamp holder 2000, a light source 400 and an anti-glare reflector cup 1000 arranged on the lamp holder 2000, the light source 400 adopts an LED chip, and the maximum light emitting direction of the light source 400 coincides with the optical axis 500, the light distribution is the most uniform at this time.

The above disclosure has been described by way of example and in terms of exemplary embodiment, and it is to be understood that the disclosure is not limited thereto. Rather, any modifications, equivalent alternatives or improvement etc. within the spirit of the invention are encompassed within the scope of the invention as set forth in the appended claims.

## Claims

1. An anti-glare reflective cup (1000), comprising a reflective sidewall (100), wherein
the reflective sidewall (100) surrounds a reflective cavity (101), and the reflective cavity (101) is cone-shaped having a large end which is a light exit end (200) and a small end,
a light source placement location (300) is provided near the small end, and
a straight line passing through the light source placement location (300) and perpendicular to the plane where the light exit end (200) is located is defined as the optical axis (500),
**characterized in that,**
in any plane passing through the optical axis (500), light from the light source (400) placed at the light source placement location (300) includes a first light beam (401) directly emitted from the light exit end (200) and a second light beam (402) emitted from the light exit end (200) after being reflected by the reflective sidewall (100); wherein
on the same side of the optical axis (500), the maximum included angle between the first light beam (401) and the optical axis (500) is a maximum straight outgoing light angle (403), and the maximum included angle between the second light beam (402) which is reflected by the reflective sidewall (100) and then emitted from the light exit end (200) and the optical axis (500) is the maximum reflection outgoing light angle (404), and
the maximum reflection outgoing light angle (404) is less than or equal to the maximum straight outgoing light angle (403).

2. The anti-glare reflector cup (1000) as claimed in claim 1, wherein in any plane passing through the optical axis (500), at least part of the reflective sidewall (100) is straight or curved.

3. The anti-glare reflector cup (1000) as claimed in claim 2, wherein in any plane passing through the optical axis (500), when at least part of the reflective sidewall (100) is curved, the center of curvature of the curve is located outside the reflective sidewall (100).

4. The anti-glare reflector cup (1000) as claimed in claim 3, wherein in any plane passing through the optical axis (500), when at least part of the reflective sidewall (100) is curved, the center of curvature of the curve is located outside the reflective sidewall (100), and the radius of curvature of the curve becomes smaller and smaller along the direction away from the light source placement location (300).

5. The anti-glare reflector cup (1000) as claimed in any of the preceding claims, wherein among the reflected light of the second light beam (402) on the reflective sidewall (100) that is farthest from the light source placement location (300), the optical axis (500) intersects or is parallel to the inverse extension line of the reflected light having the largest included angle with the plane where the light exit end (200) is located;
or,
among the reflected light of the second light beam (402) on the reflective sidewall (100) that is farthest from the light source placement location (300), the optical axis (500) intersects to the reflected light having the largest included angle with the plane where the light exit end (200) is located; the included angle is α, 0< α ≦ 10° .

6. The anti-glare reflector cup (1000) as claimed in any of the preceding claims, wherein among the reflected light of the second light beam (402) on the reflective sidewall (100) that is farthest from the light source placement location (300), the optical axis (500) intersects to the reflected light having the largest included angle with the plane where the light exit end (200) is located, the included angle is α, and α>10°.

7. The anti-glare reflector cup (1000) as claimed in any of claims 1 to 6, wherein in a plane perpendicular to the optical axis (500), the reflective sidewall (100) is round shaped or polygonal.

8. The anti-glare reflector cup (1000) as claimed in claim 7, wherein when the reflective sidewall (100) is polygonal, a chamfer is provided at the junction of the reflective sidewall (100).

9. The anti-glare reflector cup (1000) as claimed in claim 8, wherein in a plane perpendicular to the optical axis (500), the reflective sidewall (100) is a regular polygon.

10. The anti-glare reflector cup (1000) as claimed in claim 9, wherein in a plane perpendicular to the optical axis (500), the reflective sidewall (100) is rectangular.

11. The anti-glare reflector cup (1000) as claimed in claim 9, wherein the center of the regular polygon falls on the optical axis (500).

12. The anti-glare reflector cup (1000) as claimed in any of claims 1 to 6, wherein the reflective surface of the reflective sidewall (100) is a mirror surface.

13. The anti-glare reflector cup (1000) as claimed in any of claims 1 to 6, wherein the optical axis (500) coincides with the maximum light emitting direction of the light source (400).

14. A lamp, comprising a lamp holder (2000), a light source (400) arranged on the lamp holder (2000) and the anti-glare reflector cup (1000) as claimed in any one of claims 1-13.

15. The lamp of claim 14, wherein the light source (400) uses an LED chip.

16. The lamp of claim 14, wherein the maximum light emitting direction of the LED chip coincides with the optical axis (500).
